Europäisches Patentamt

European Patent Office

Office européen des brevets

(11) Publication number: **0 450 076 A1**

# EUROPEAN PATENT APPLICATION
## published in accordance with Art. 158(3) EPC

(21) Application number: 90900981.3

(22) Date of filing: **14.12.89**

(86) International application number:
**PCT/JP89/01254**

(87) International publication number:
**WO 90/06972 (28.06.90 90/15)**

(51) Int. Cl.5: **C08L 75/04**

(30) Priority: **15.12.88 JP 317343/88**

(43) Date of publication of application:
**09.10.91 Bulletin 91/41**

(84) Designated Contracting States:
**AT BE DE FR GB IT LU NL SE**

(71) Applicant: **MD KASEI LIMITED**
**4-1, Marunauchi 3-chome, Chiyoda-ku**
**Tokyo 100(JP)**

(72) Inventor: **TACHIBANA, Shintaro MD Kasei**
**Limited Laboratory**
**1000, Kamoshida-cho Midori-ku**
**Yokohama-shi**
**Kanagawa 227(JP)**
Inventor: **OKUDA, Kazuo MD Kasei Limited**
**Laboratory**
**1000, Kamoshida-cho Midori-ku**
**Yokohama-shi**
**Kanagawa 227(JP)**
Inventor: **HARADA, Kensuke MD Kasei**
**Limited Laboratory**
**1000, Kamoshida-cho Midori-ku**
**Yokohama-shi**
**Kanagawa 227(JP)**

(74) Representative: **Burford, Anthony Frederick**
**W.H. Beck, Greener & Co. 7 Stone Buildings**
**Lincoln's Inn**
**London WC2A 3SZ(GB)**

(54) **POLYURETHANE MOLDING HAVING EXCELLENT RESISTANCE TO WATER ABSORPTION.**

(57) This invention relates to a polyurethane molding having a density of 0.5 to 1.2 $g/cm^3$, containing tris($\beta$-chloropropyl)phosphate and being excellent in the resistance to water absorption. This molding is produced by the reaction of a polyisocyanate, a polyol and a cross-linking agent, if necessary in the presence of a catalyst, a flowing agent and other additives, in a mold, wherein tris([$\beta$-chloropropyl)phosphate is added to the reaction mixture.

## TECHNICAL FIELD

The present invention relates to a polyurethane shaped article. More particularly, the present invention relates to a polyurethane shaped article having an excellent resistance to water absorption.

A polyurethane shaped article is utilized for automobile parts, electronic parts, and electrical parts according to the physical properties thereof, but recently, the application of a polyurethane shaped article to exterior parts of an automobile such as a bumper, an air spoiler, a fender, a door and a panel, and parts of electronic and electrical appliances such as a computer and a housing of an air conditioner has become wide-spread.

## BACKGROUND ART

A polyurethane shaped article is generally prepared by introducing a reaction mixture comprising a polyisocyanate, a polyol, a crosslinking agent, a catalyst, and an additive into a mold that can be closed.

Since, however, a conventional polyurethane shaped article has a large water-absorbing property, an increase of the size or swelling of the volume thereof often occurs, and in a high-humidity atmosphere or when in contact with water, a large polyurethane shaped article having a complicated shape is liable to distortion and deformation.

## DISCLOSURE OF THE INVENTION

The present inventors carried out research with a view to improving the resistance of a polyurethane shaped article against an absorption of water, and as a result, found that a polyurethane shaped article containing tris($\beta$-chloropropyl) phosphate has an excellent resistance against changes of the size and volume due to an absorption of water. The present invention is based on this finding.

More specifically, in accordance with the present invention, there is provided a polyurethane shaped article having an excellent resistance against the absorption of water, and having a density of 0.5 to 1.2 g/cm$^3$ and containing tris($\beta$-chloropropyl) phosphate, prepared by reacting a polyisocyanate, a polyol, and a crosslinking agent in a mold, if necessary, in the presence of a catalyst, a foaming agent, and other additives, and in the presence of tris($\beta$-chloropropyl) phosphate.

## BEST MODE OF CARRYING OUT THE INVENTION

In the present invention, a polyurethane-forming mixture is reacted in the presence or tris($\beta$-chloropropyl) phosphate. The amount of tris($\beta$-chloropropyl) phosphate is usually 0.5 to 5% by weight, preferably 1 to 3% by weight, based on the sum of the polyisocyanate, polyol and crosslinking agent. If the amount of tris($\beta$-chloropropyl) phosphate is smaller than 0.5% by weight, a substantial improvement of the resistance to an absorption of water cannot be obtained. If the amount of tris($\beta$-chloropropyl) phosphate is larger than 5% by weight, the improvement of the resistance to our absorption of water is not increased, and instead, the process becomes disadvantageous from the economical viewpoint.

Tris($\beta$-chloropropyl) phosphate is peculiar in its effect of improving the resistance to water absorption, compared with other phosphoric acid esters such as trimethyl phosphate, triethyl phosphate, tripropyl phosphate, and tributyl phosphate.

Tris($\beta$-chloropropyl) phosphate can be added to either of the isocyanate component and the polyol component when forming a polyurethane shaped article.

Any polyisocyanates customarily used for the production of polyurethane can be used in the present invention. For example, there can be used aromatic polyisocyanates such as 2,4- and/or 2,6-tolylene diisocyanate (TDI), crude TDI, 2,4- and/or 4,4'-diphenylmethane diisocyanate (MDI), and crude MDI, aliphatic polyisocyanates such as hexamethylene diisocyanate, isophorone isocyanate, and dicyclohexylmethane diisocyanate, aromatic-aliphatice isocyanates such as xylylene diisocyanate, and modification products of the foregoing isocyanates (modified polyisocyanates containing a urethane group, a carbodiimide group, a urethane imine group, an isocyanurate group or an oxazolidone group). These polyisocyanates can be used alone or in the form of a mixture of two or more thereof.

Any polyols customarily used for the production of polyurethanes can be used in the present invention. For example, there can be mentioned polyether polyols, polyester polyols, and polymer polyols. These polyols usually have 2 to 6 hydroxyl groups and an OH value of about 20 to 500 mg KOH/g.

As the cross linking agent used in the present invention, there can be mentioned low-molecular-weight diols such as ethylene glycol, diethylene glycol, propylene glycol, dipropylene glycol, 1,4-butanediol, and 1,6-hexanediol, alkanol amines such as monoethanol amine, diethanol amine, triethanol amine, monopropanol amine, and tripropanol amine, aliphatic polyamines such as ethylenediamine, trimethylenediamine, tetramethylenediamine, and diethylenetriamine, aromatic polyamines such as phenylenediamine, tolylenediamine, diethyltolylenediamine, diphenylmethane diamine, and methylene-bis(o-chloroaniline), and mixtures of two or more thereof.

The amount of the crosslinking agent is generally 5 to 40% by weight, preferably 10 to 30% by weight, based on the polyol.

Any known catalysts for the polyurethane-forming reaction can be used in the present invention. For example, there can be mentioned amine type catalysts such as tertiary amines, e.g., triethylenediamine and N-ethylmorpholine, tin type catalysts such as dibutyl tin dilaurate and stannous octylate, and other metal type catalysts such as lead octylate. The amount of the catalyst is preferably 0.01 to 5% by weight based on the sum of the polyol and crosslinking agent.

A foaming agent such as trichloromonofluoromethane, methylene chloride or water can be used according to need in the present invention, and the amount of the foaming agent can be appropriately selected according to the desired density of the polyurethane shaped article.

The density of the polyurethane shaped article is within the range of from 0.5 to 1.2 $g/cm^3$. If the density of the polyurethane shaped article is outside this range, the improvement of the resistance to an absorption of water by an addition of tris($\beta$-chloropropyl)phosphateis relatively low.

In the present invention, when forming a polyurethane shaped article, the NCO index [(NOC group/active hydrogen atom-containing group equivalent ratio) x 100] is preferably 80 to 120, more preferably 95 to 108.

In the present invention, other additives such as a foam-regulating agent, a plasticizer, a stabilizer, a colorant, and a filler can be added according to need.

A polyurethane shaped article having a specific compound incorporated therein, according to the present invention, shows a very small change of the size or volume due to an absorption of water, and when this shaped article is used an automobile exterior part or electrical appliance part having a large size and a complicated shape, problems such as distortion and deformation do not arise. Accordingly, the polyurethane shaped article of the present invention is very valuable.

The present invention will now be described in detail with reference to the following examples and comparative examples, that by no means limit the scope of the invention. In the examples and comparative examples, all of "parts" are by weight.

The starting materials used in the examples and comparative examples are described below.

(1) Isocyanate

Isonate 143L (carbodiimide-modified MDI having an NCO content of 28.3%)

(2) Polyol A

Polyol having an OH value of 28 mg KOH/g, and obtained by adding 4700 parts of propylene oxide to 92 parts of glycerol and then adding 1200 parts of ethylene oxide

(3) Catalyst

DBTDL (dibutyl tin dilaurate) and DABCO 33LV (solution containing 33% of triethylene diamine in dipropylene glycol)

Examples 1 and 2

According to the recipe shown in Table 1 and the shaping conditions described below, a polyol premix comprising polyol A, ethylene glycol, the catalyst, tris($\beta$-chloropropyl) phosphate, and an isocyanate were charged in a starting material tank of a high-pressure foaming machine, were mixed by impingement by a mixing head, and the reaction mixture was injected in a closable mold in which the temperature could be adjusted and which had a thickness of 3.0 mm, a width of 550 mm, and a length of 600 mm, whereby a polyurethane shaped article was formed.

Shaping Conditions
High-pressure foaming machine: HD 500 (supplied by Admiral Co.)

3

Extrusion speed: 500 g/sec Extrusion pressure: 150 to 170 kg/cm$^3$

Temperature of starting material: 40 ± 2° C Temperature of mold: 70 ± 2° C

The physical properties and water-absorbing property of the obtained polyurethane shaped article are shown in Table 1.

The sample for the measurement of the physical properties was post-cured at 120° C for 1 hour, 1 hour after the completion of the shaping operation, and the sample was allowed to stand in a constant-temperature room maintained at a temperature of 23° C and a relative humidity of 65%, and then measured.

The sample for the measurement of the water-absorbing property was post-cured at 120° C for 1 hour, 1 hour after the completion of the shaping operation, and the sample was stored in a desiccator maintained at 23° C for more than 48 hours, and then measured.

The following measurement methods were adopted. Sample size: 75 mm x 150 mm x 3.0 mm

Density: method A of JIS K-7112 (in-water substitution method)

Tensile strength and elongation: tensile test method of JIS K-6301)

Flexural modulus:

Method of ASTM D-790

Water-absorbing property:

Immersion method of JIS K-6301 (the sample was immersed in warm water at 40° C for 240 hours, and the size change ratio ΔL and volume change ratio ΔV were measured)

Comparative Examples 1 through 3

Polyurethane shaped articles were prepared in the same manner as described in Example 1 except another phosphate compound was used instead of tris(β-chloropropyl) phosphate. The physical properties and water-absorbing property of each of the obtained shaped articles were measured, and the results are shown in Table 1.

**Table 1**

| Recipe (parts) | Example No. 1 | Example No. 2 | Comparative Example No. 1 | Comparative Example No. 2 | Comparative Example No. 3 |
|---|---|---|---|---|---|
| Isonate 143L | 97.4 | 97.4 | 97.4 | 97.4 | 97.4 |
| (NCO index) | (104) | (104) | (104) | (104) | (104) |
| polyol A | 82 | 82 | 82 | 82 | 82 |
| ethylene glycol | 18 | 18 | 18 | 18 | 18 |
| DBTDL | 0.06 | 0.06 | 0.06 | 0.06 | 0.06 |
| DABCO 33LV | 1.0 | 1.0 | 1.0 | 1.0 | 1.0 |
| tris($\beta$-chloropropyl)phosphate | 5.0 | 3.0 | - | - | - |
| trimethyl phosphate | - | - | - | 1.5 | - |
| tripropyl phosphate | - | - | - | - | 3.0 |
| phosphate content in resin (%) | 2.5 | 1.5 | 0 | 0.76 | 1.5 |
| **Physical Properties** density (g/cm$^3$) | 1.03 | 1.04 | 1.07 | 1.06 | 1.06 |
| tensile strength (kg/cm$^2$) | 250 | 250 | 270 | 260 | 250 |
| elongation (%) | 210 | 200 | 180 | 180 | 195 |
| flexural modulus (kg/cm$^2$) | 3110 | 3160 | 3330 | 3250 | 3200 |
| **Water-Absorbing Property** $\Delta$L (%) | 0.4 | 0.5 | 1.0 | 1.6 | 1.1 |
| $\Delta$V (%) | 1.5 | 1.6 | 2.9 | 4.8 | 2.9 |

## INDUSTRIAL APPLICABILITY

The present invention provides a polyurethane shaped article having an excellent resistance to water absorption and able to be advantageously utilized for automobile, electronic, and electric parts, or the like.

## Claims

1. A polyurethane shaped article having an excellent resistance to water absorption, and having a density of 0.5 to 1.2 g/cm$^3$ and containing tris($\beta$-chloropropyl) phosphate.

2. A shaped article as claimed in claim 1, wherein the polyurethane is obtained by reacting a starting composition comprising a polyisocyanate, a polyol and a crosslinking agent, in a mold.

3. A shaped article as claimed in claim 2, wherein the amount of tris($\beta$-chloropropyl) phosphate is 0.5 to 5%, based on the total weight of the polyisocyanate, polyol and crosslinking agent.

4. A shaped article as claimed in claim 3, wherein the amount is 1 to 3%.

5. A process for preparing a polyurethane shaped article having a density of 0.5 to 1.2 g/cm$^3$, by reacting a polyisocyanate, a polyol and a crosslinking agent in a mold, if necessary in the presence of a catalyst, a foaming agent and another additive, in which tris($\beta$-chloropropyl) phosphate is incorporated.

6. A process as claimed in claim 5, wherein the amount of tris($\beta$-chloropropyl) phosphate is 0.5 to 5% based on the total weight of the polyisocyanate, polyol and crosslinking agent.

7. A process as claimed in claim 6, wherein the amount is 1 to 3%.

8. A process as claimed in claim 5, wherein the polyisocyanate is selected from aromatic polyisocyanates, aliphatic polyisocyanates, aromatic-aliphatic isocyanates, modification products thereof, and mixtures of two or more thereof.

9. A process as claimed in claim 5, wherein the polyol is selected from polyether polyols, polyester polyols, and polymer polyols.

10. A process as claimed in claim 5, wherein the crosslinking agent is selected from low-molecular-weight diols, alkanol amines, aliphatic polyamines, aromatic polyamines, and mixtures of two or more thereof.

11. A process as claimed in claim 10, wherein the amount of the crosslinking agent is 5 to 40% based on the weight of the polyol.

# INTERNATIONAL SEARCH REPORT

International Application No PCT/JP89/01254

## I. CLASSIFICATION OF SUBJECT MATTER (if several classification symbols apply, indicate all) 6

According to International Patent Classification (IPC) or to both National Classification and IPC

Int. Cl$^5$    C08L75/04

## II. FIELDS SEARCHED

### Minimum Documentation Searched 7

| Classification System | Classification Symbols |
|---|---|
| IPC | C08L75/00 - 75/16 |

### Documentation Searched other than Minimum Documentation to the Extent that such Documents are Included in the Fields Searched 8

| | |
|---|---|
| Jitsuyo Shinan Koho | 1926 - 1989 |
| Kokai Jitsuyo Shinan Koho | 1971 - 1989 |

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| X | DD, A, 160,561 (Veb Synthesew Schwa), 14 September 1983 (14. 09. 83), (Family: none) | 1 - 11 |
| X | DD, A, 160,562 (Veb Synthesew Schwa), 14 September 1983 (14. 09. 83), (Family: none) | 1 - 11 |
| X | JP, B2, 43-27,119 (Imperial Chemical Industries Ltd.), 21 November 1968 (21. 11. 68), Claim, page 1, right column, lines 11 to 14 & GB, A, 1,159,435 | 1 - 11 |
| X | JP, B2, 47-32,600 (Imperial Chemical Industries Ltd.), 19 August 1972 (19. 08. 72), Claim, page 1, left column, 4th line from the bottom to right column, line 4 & GB, A, 1,217,836 | 1 - 11 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 3, 1990 (03. 03. 90) | March 19, 1990 (19. 03. 90) |

| International Searching Authority | Signature of Authorized Officer |
|---|---|
| Japanese Patent Office | |

Form PCT/ISA/210 (second sheet) (January 1985)